(19) Europäisches Patentamt
European Patent Office
Office européen des brevets

(11) **EP 2 628 262 B1**

(12) **FASCICULE DE BREVET EUROPEEN**

(45) Date de publication et mention de la délivrance du brevet:
**23.07.2014 Bulletin 2014/30**

(21) Numéro de dépôt: **11779812.4**

(22) Date de dépôt: **06.10.2011**

(51) Int Cl.:
*H04B 10/2569* (2013.01)   *H04B 10/532* (2013.01)

(86) Numéro de dépôt international:
**PCT/FR2011/052340**

(87) Numéro de publication internationale:
**WO 2012/049407 (19.04.2012 Gazette 2012/16)**

(54) **COMPENSATION DE DISPERSION MODALE DE POLARISATION PAR BROUILLAGE DETERMINISTE DE POLARISATION**

KOMPENSATION VON MODALER POLARISATIONSDISPERSION ANHAND VON DETERMINISTISCHER POLARISATIONSSTÖRUNG

COMPENSATION OF MODAL DISPERSION OF POLARIZATION BY DETERMINISTIC POLARIZATION SCRAMBLING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.10.2010 FR 1058447**

(43) Date de publication de la demande:
**21.08.2013 Bulletin 2013/34**

(73) Titulaire: **Orange**
**75015 Paris (FR)**

(72) Inventeurs:
• **EL FALOU, Abdul Rahman**
**Liban (LB)**
• **GAVIGNET, Paulette**
**F-22730 Trégastel (FR)**

• **PINCEMIN, Erwan**
**F-22290 Gommenec'h (FR)**

(74) Mandataire: **Cabinet Plasseraud**
**52, rue de la Victoire**
**75440 Paris Cedex 09 (FR)**

(56) Documents cités:
**EP-A2- 0 717 523     JP-A- 2007 329 558**
**US-A- 5 008 958**

• **HENRY H YAFFE ET AL: "Experimental Determination of System Outage Probability Due to First-Order and Second-Order PMD", JOURNAL OF LIGHTWAVE TECHNOLOGY, IEEE SERVICE CENTER, NEW YORK, NY, US, vol. 24, no. 11, 1 novembre 2006 (2006-11-01), pages 4155-4161, XP011150162, ISSN: 0733-8724, DOI: DOI:10.1109/JLT.2006.883124**

**Description**

L'invention concerne le domaine des systèmes de transmission optique, et plus particulièrement celui des systèmes de transmission optique soumis à la dispersion modale de polarisation.

Un système de transmission optique est typiquement composé d'un terminal émetteur émettant au moins une onde porteuse optique polarisée dont la puissance ou la phase est modulée en fonction de l'information à transmettre, d'une section de fibre, le plus souvent monomode, acheminant le signal émis par le terminal émetteur et d'un terminal récepteur servant à recevoir le signal optique transmis par la fibre.

La performance d'un système de transmission optique, notamment en termes de qualité de signal et de débit, est limitée en particulier par les propriétés optiques de la fibre optique qui est le siège des phénomènes physiques ayant pour effet de dégrader les signaux optiques.

Parmi les phénomènes identifiés, l'atténuation de la puissance optique et la dispersion chromatique sont ceux qui sont apparus en premier comme les plus contraignants et pour lesquels on a proposé des moyens pour remédier au moins partiellement aux dégradations qu'ils entraînent.

Un autre phénomène défavorable est la "dispersion modale de polarisation" (PMD, pour « Polarisation Mode Dispersion » en anglais). Un tel phénomène n'est plus du tout négligeable, dès lors que l'on a cherché à augmenter toujours plus le débit de transmission des signaux optiques.

Ce phénomène de dispersion modale de polarisation est par ailleurs particulièrement difficile à compenser lorsque le système de transmission optique qu'il affecte est un système de transmission optique WDM (pour Wavelength Division Multiplexing en anglais) utilisé pour les liaisons terrestres longue distance et fonctionnant avec des débits par canal de 10Gbit/s et plus. En effet chaque canal est affecté de façon différente par la dispersion modale de polarisation ce qui oblige à utiliser des solutions de compensation monocanal.

Avec de tels débits, l'influence de la dispersion modale de polarisation des fibres devient problématique. En effet, un nombre non négligeable de fibres des réseaux des opérateurs historiques possèdent des caractéristiques en PMD telles que la transmission à 10 Gbit/s et au-delà n'est pas possible sans un changement de tout ou partie du câble ce qui représente un investissement important pour les opérateurs concernés.

Certains dispositifs optiques de compensation de polarisation ont bien été proposés pour tenter de compenser l'impact de la dispersion modale de polarisation, mais ne sont toujours pas utilisés dans la pratique à 10Gbit/s, d'une part à cause de leur coût élevé, mais aussi d'autre part parce que ces solutions sont plutôt adaptées à des systèmes monocanal (alors que les liens WDM comportent plusieurs dizaines de canaux) et qu'elles ont un potentiel limité en termes de gain et de rapidité de réponse. Par ailleurs, la plupart de ces dispositifs optiques de compensation nécessitent un signal de contre-réaction ce qui impose un délai entre la détection de la dégradation et l'application des bons paramètres dans le dispositif de compensation.

D'autres solutions de compensation électroniques à 10 Gbit/s, à base d'égalisateurs de type FFE/DFE (pour Feed Forward Equalizer, respectivement Decision Feedback equalizer, en anglais) ou de type MLSE (pour Maximum Likelihood Sequence Estimator en anglais) ont également été développées et représentent une alternative envisageable au remplacement de câbles. Ces solutions reposent cependant toujours sur le concept d'un compensateur par canal, ce qui représente un coût élevé si l'on veut compenser la dispersion de polarisation dans un système WDM:

La présente invention vise à remédier aux inconvénients précités et a pour objet de fournir un moyen de compensation de la dispersion modale de polarisation PMD, applicable notamment dans les systèmes WDM et permettant dans ce cas d'utiliser un seul, ou un nombre limité de dispositif(s) pour compenser en même temps la PMD affectant tous les canaux d'une liaison optique, afin de minimiser les coûts engendrés.

La présente invention a également pour objet de proposer une solution de compensation de la dispersion modale de polarisation qui soit indépendante du débit du signal optique, indépendante du format de modulation employé dans le signal optique et qui ne nécessite pas de signal de contre-réaction.

Elle propose à cet effet un procédé de calcul d'une série de paramètres de commande à appliquer à un contrôleur de polarisation, agencé pour compenser la dispersion modale de polarisation affectant un signal optique traversant une liaison optique en fonction de paramètres de commande, le procédé comprenant le calcul d'une pluralité d'états de polarisation dont les représentations respectives sur une sphère de Poincaré sont séparées les unes des autres d'une distance supérieure à une distance minimale dépendant d'un seuil acceptable de taux d'erreurs binaires et, pour chaque état de polarisation calculé, l'association d'au moins un paramètre de commande à appliquer au contrôleur de polarisation avec cet état de polarisation calculé.

Il est ici souligné que l'invention tire son origine d'un problème technique identifié pour un signal optique multicanaux. Toutefois, les procédés sont également applicables à un signal optique monocanal.

En particulier, le procédé de calcul comprend en outre la détermination d'un nombre $n_{SOP}$ d'états de polarisation distincts à calculer et le calcul de la pluralité d'états de polarisation comprend le calcul de $n_{SOP}$ états de polarisation présentant des représentations sensiblement équidistantes sur la sphère de Poincaré, ce qui permet d'obtenir simplement une pluralité d'états de polarisation parmi lesquels un seul état au maximum tombe dans une zone de la sphère de Poincaré associée à des taux d'erreurs binaires élevés.

De manière avantageuse, les $n_{SOP}$ états de polarisation distincts sont calculés de sorte à ce que leurs représentations respectives soient distribuées sur l'ensemble de la sphère de Poincaré, ce qui permet de réduire encore plus la probabilité de tomber plusieurs fois dans une même zone de la sphère de Poincaré associée à des taux d'erreurs binaires élevés.

Selon un mode particulier de réalisation, la détermination du nombre $n_{SOP}$ d'états de polarisation à calculer comprend le calcul d'un nombre maximum $MAX(n_{SOP})$ d'états de polarisation en fonction de la distance minimale et la sélection d'un nombre $n_{SOP}$ d'états de polarisation inférieur ou égal à ce nombre maximum $MAX(n_{SOP})$. Ceci permet d'éviter que deux points voisins se trouvent dans la même zone de la sphère de Poincaré associée à des taux d'erreurs binaires élevés et permet ainsi de limiter le taux d'erreurs binaires.

Dans un mode de réalisation avantageux où le signal optique transporte au moins une trame de données et dans lequel un code correcteur d'erreurs est employé pour coder les données transportées par le signal optique, l'étape de détermination du nombre $n_{SOP}$ d'états de polarisation à calculer comprend en outre le calcul d'un nombre minimum $MIN(n_{SOP})$ d'états de polarisation à calculer en fonction du nombre $n_{bits}$ de bits de cette trame et de la capacité $Gap_{cod}$ de correction du code correcteur d'erreurs, le nombre $n_{SOP}$ étant en outre sélectionné pour être supérieur ou égal audit nombre minimum $MIN(n_{SOP})$.

Il est ainsi possible de garantir que la limite de correction du code correcteur d'erreurs ne sera pas dépassée, et donc de garantir une transmission présentant des niveaux d'erreurs très faibles après correction.

Avantageusement, le code correcteur d'erreurs est construit au moins à partir de la concaténation d'un premier code interne, apte à réduire la distance minimale, et d'un deuxième code correcteur d'erreurs adapté pour la correction de blocs d'erreurs, ce qui permet d'augmenter l'efficacité de la compensation de dispersion modale de polarisation selon la présente invention. Le choix d'un code correcteur donné permet de réduire la zone de pénalités associée à des taux d'erreurs binaires élevés, et de ce fait de réduire la distance minimale.

La présente invention propose également un procédé de compensation de la dispersion modale de polarisation affectant un signal optique lors de sa transmission dans une liaison optique, ce procédé comprenant l'application successive d'une série de paramètres de commande prédéterminés à un contrôleur de polarisation situé en amont de la liaison optique, ces paramètres de commande prédéterminés étant calculés au moyen du procédé de calcul ci-avant.

Dans un mode de réalisation où le signal optique transporte au moins une trame de données, les paramètres de commande prédéterminés sont avantageusement appliqués durant une durée d'application déterminée en fonction de du nombre $n_{bits}$ de bits de cette trame et du nombre $n_{SOP}$ d'états de polarisation.

La présente invention propose en outre un programme d'ordinateur comprenant des instructions de code pour mettre en oeuvre les étapes du procédé de calcul ci-avant, lorsqu'il est chargé et exécuté sur un module de calcul, ainsi qu'un programme d'ordinateur comprenant des instructions de code pour mettre en oeuvre les étapes du procédé de compensation ci-avant, lorsqu'il est chargé et exécuté dans un dispositif de compensation de dispersion. Au titre de la protection recherchée, les programmes d'ordinateur ci-avant sont à considérer comme des produits programme d'ordinateur.

La présente invention propose également un dispositif de compensation de dispersion modale de polarisation comprenant un contrôleur de polarisation apte à recevoir un signal optique et un module de commande arrangé pour appliquer au moins un paramètre de commande au contrôleur de polarisation, ce dispositif de compensation étant apte à mettre en oeuvre le procédé de compensation ci-avant.

Dans un mode de réalisation avantageux d'un tel dispositif de compensation, le module de commande comporte en outre des moyens de mémorisation dans lesquels est enregistrée une pluralité de paramètres de commande à appliquer au contrôleur de polarisation, cette pluralité de paramètres de commande étant obtenue au moyen du procédé de calcul ci-avant.

La présente invention propose enfin un système de transmission optique comprenant au moins une liaison optique traversée par un signal optique et le dispositif de compensation de dispersion modale de polarisation ci-avant, ledit dispositif de compensation étant connecté à l'entrée de ladite liaison optique et arrangé pour modifier l'état de polarisation du signal optique avant son entrée dans la liaison optique afin de compenser la dispersion modale de polarisation affectant le signal optique lors de la traversée de cette liaison optique.

De manière avantageuse, un tel système de transmission optique comprend en outre au moins une fibre optique additionnelle dont la longueur est déterminée de sorte à ce que le niveau de dispersion chromatique résiduelle en sortie de la liaison optique dépasse un seuil prédéterminé de dispersion, afin de faire en sorte que les états de polarisation d'entrée de liaison optique entraînant des taux d'erreurs binaires élevés soient rassemblés au sein d'une zone unique sur la sphère de Poincaré, et donc de faciliter l'évitement de telles polarisations d'entrée.

En outre, un tel système de transmission optique comprend avantageusement une pluralité d'émetteurs optiques connectés à un multiplexeur optique pour fournir un signal optique multicanaux au dispositif de compensation, la pluralité d'émetteurs optiques et le multiplexeur optique étant réalisés avec des composants à maintien de polarisation afin de mieux maîtriser la polarisation d'entrée de liaison optique.

Les procédés de calcul et de compensation de dispersion modale de polarisation, ainsi que le dispositif de compensation et le système de transmission optique utilisant un tel dispositif, objets de l'invention, seront mieux compris à la lecture de la description et à l'observation des dessins ci-après dans lesquels :

- les figures 1A et 1B illustrent une sphère de Poincaré représentant le taux d'erreurs binaires associé à un signal optique traversant une fibre optique soumise à la dispersion modale de polarisation de premier ordre en fonction de l'état de polarisation du signal optique à l'entrée de cette fibre optique ;
- les figures 1C et 1D illustrent une sphère de Poincaré représentant le taux d'erreurs binaires associé à un signal optique traversant une fibre optique soumise aux dispersions modales de polarisation de premier et deuxième ordres en fonction de l'état de polarisation du signal optique à l'entrée de cette fibre optique ;
- les figures 1E et 1F illustrent une sphère de Poincaré représentant le taux d'erreurs binaires associé à un signal optique traversant une fibre optique soumise aux dispersions modales de polarisation de premier et deuxième ordres, ainsi qu'à une dispersion chromatique résiduelle non nulle, en fonction de l'état de polarisation du signal optique à l'entrée de cette fibre optique ;
- la figure 2 illustre une sphère de Poincaré sur laquelle est représenté le principe de la présente invention ;
- la figure 3 illustre les étapes d'un procédé de calcul d'une série de paramètres de commande à appliquer à un brouilleur de polarisation selon un mode particulier de réalisation de la présente invention ;
- la figure 4 illustre les sous-étapes constitutives de l'étape de détermination du nombre d'états de polarisation à calculer dans un mode de réalisation de la présente invention ;
- la figure 5 illustre schématiquement un contrôleur de polarisation pouvant être utilisé dans le cadre d'un mode particulier de réalisation de la présente invention ;
- la figure 6 illustre une demi-sphère de Poincaré sur laquelle sont représentées 16 états de polarisation $SOP_i$ et des valeurs de tensions de commande $Va_i$ et $Vc_i$ associées obtenues au moyen du procédé de calcul selon un mode particulier de réalisation de la présente invention ;
- la figure 7 illustre les étapes d'un procédé de compensation de dispersion modale de polarisation selon un mode particulier de réalisation de la présente invention ; et
- la figure 8 illustre schématiquement un système de transmission optique comprenant un dispositif de compensation de dispersion modale de polarisation selon un mode particulier de réalisation de la présente invention.

Pour mieux comprendre la présente invention, il convient d'abord de rappeler brièvement certains principes relatifs à la polarisation d'un signal optique dans une fibre.

Les défauts de fabrication et les contraintes mécaniques affectant les fibres optiques d'un réseau de transport introduisent un phénomène de biréfringence dans ces fibres optiques, ce qui résulte en la création d'un axe rapide et d'un axe lent de propagation, orthogonaux entre eux, qu'on appelle couramment "axes propres" du système.

Si le signal optique est injecté dans la fibre suivant l'un des axes propres, il est transmis dans un état favorable et il subit le minimum de dispersion modale de polarisation liée seulement au second ordre.

Par contre, si le signal optique est injecté aléatoirement dans la fibre, il peut être décomposé en deux composantes, correspondant aux projections du signal sur les axes propres de la fibre, qui vont se propager à des vitesses différentes dans la fibre.

Ainsi lors de la réception du signal en fin de liaison optique, l'impulsion reçue est déformée, entraînant une réduction des performances en transmission par une augmentation du taux des erreurs binaires (BER pour Bit Error Rate en anglais) sur les bits transportés.

On comprend ainsi aisément qu'un signal injecté à 45° des axes propres représente le cas le plus défavorable où, par projection sur les axes propres, la moitié de l'énergie se propage à une vitesse pendant que l'autre moitié se déplace à une autre vitesse, ce qui conduit aux taux d'erreurs binaires les plus élevés possibles.

Dans un tel cas, la valeur du décalage accumulé entre les deux composantes du signal en fin de liaison optique correspond à ce qu'on appelle le retard différentiel de groupe (DGD pour Differential Group Delay en anglais) et qui correspond à l'effet de la PMD au 1er ordre.

En conclusion, à chaque état de polarisation (SOP pour State Of Polarisation en anglais) à l'entrée de la liaison optique correspond un certain taux d'erreurs binaires en fonction de la position de cet état de polarisation par rapport aux axes propres.

Il faut également noter ici qu'au cours de la propagation dans la fibre, la polarisation des signaux évolue de façon aléatoire, ce qui rend plus difficile la compensation de la dispersion modale de polarisation.

Afin de visualiser l'évolution de l'état de polarisation dans une fibre optique, il est particulièrement pratique d'utiliser la représentation sur la sphère de Poincaré, où à chaque état de polarisation correspond un point unique sur cette sphère.

Cette représentation de Poincaré permet d'identifier des zones spécifiques sur cette sphère, représentant des états de polarisation à l'entrée de la fibre optique introduisant des taux d'erreurs binaires élevés.

De telles zones sont appelées "zones de pénalités". Selon l'invention, il faut essayer de ne pas rester trop longtemps dans de telles zones de pénalités, afin d'éviter de subir des taux d'erreurs binaires élevés pendant une trop grande durée ce qui engendrerait un nombre d'erreurs important. Par ailleurs, ces zones de pénalités traduisent l'évolution du degré de polarisation (DOP pour Degree Of Polarization en anglais) qui est un indicateur de l'influence de la PMD sur le signal optique.

Ces zones de pénalités ne sont pas fixes dans le temps, car elles sont liées à la position des axes propres du système de transmission optique qui varient au cours du temps à cause notamment de la température et/ou de la pression exercée sur la fibre optique.

La position de ces zones de pénalités fluctue donc au cours de la vie du système, mais de façon relativement lente par rapport à la variation du retard différentiel de groupe ou de la dispersion modale de polarisation à une longueur d'onde donnée, comme cela est décrit dans l'article « Polarization mode dispersion compensator field trial and field fiber characterization » de Daniel L. Peterson Jr. et al., 15 Juillet 2002, Vol. 10, No. 14, OPTICS EXPRESS 614.

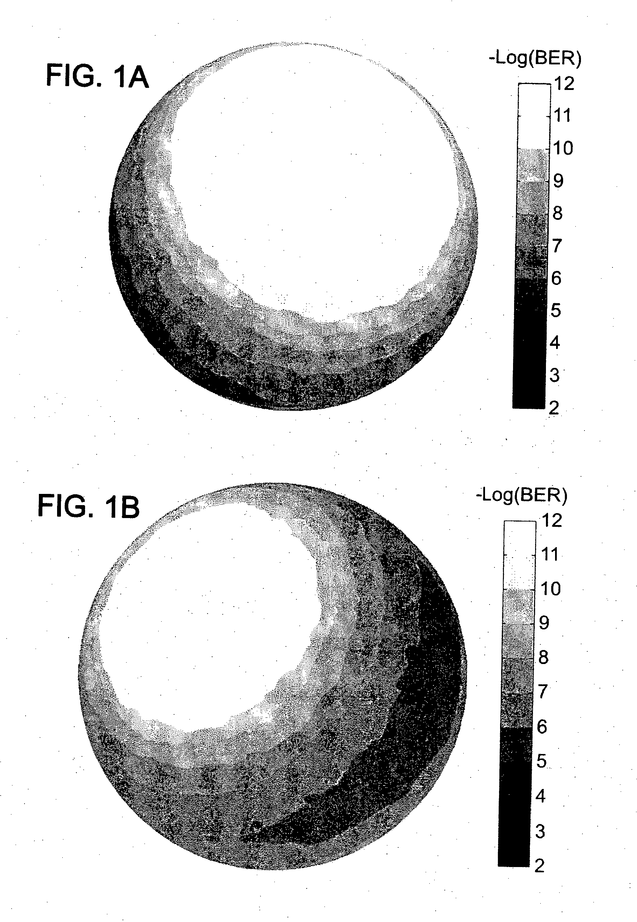

De plus, de telles zones de pénalité dépendent de la longueur d'onde, ce qui explique pourquoi une compensation, notamment dans le cas d'un signal optique multicanaux, est difficile à mettre en oeuvre. Les figures 1A à 1F illustrent les différentes formes que peuvent prendre de telles zones de pénalités en fonction du type de dispersion considéré.

On se réfère ainsi tout d'abord aux **figures 1A** et **1B**, lesquelles illustrent une sphère de Poincaré représentant le taux d'erreurs binaires associé à un signal optique traversant une fibre optique soumise seulement au premier ordre de la dispersion modale de polarisation en fonction de l'état de polarisation du signal optique à l'entrée de cette fibre optique.

Cette sphère de Poincaré étant traditionnellement en trois dimensions, les figures 1A et 1B illustrent les projections respectives des deux hémisphères opposées constituant la sphère de Poincaré, pour des raisons pratiques de visualisation.

Ces figures sont obtenues à partir de résultats de simulation, confirmés par des résultats expérimentaux, montrant les taux d'erreurs binaires, exprimés sous la forme de leurs $-\log_{10}(BER)$, calculés pour 130 points d'états de polarisation équidistants sur la sphère de Poincaré en présence d'un retard différentiel de groupe de 60 ps. Les zones en gris foncé représentent les taux d'erreurs binaires élevés.

On voit ainsi sur ces figures 1A et 1B que la zone de pénalités, représentée en gris foncé, où le taux d'erreurs binaires dépasse un certain seuil (par exemple de l'ordre de $10^{-5}$) forme un anneau. On peut également distinguer les axes propres qui sont représentés par les deux zones en gris clair correspondant aux meilleurs taux d'erreurs binaires, c'est-à-dire concernant des taux d'erreurs binaires en dessous d'une valeur (par exemple de l'ordre de $10^{-10}$).

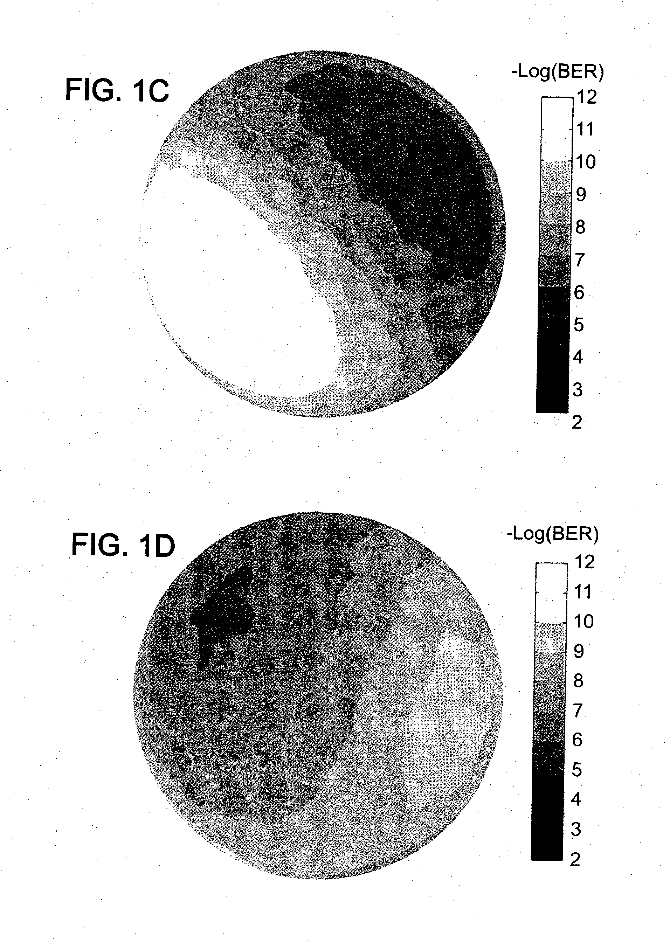

Les figures **1C** et **1D** illustrent, quant à elles, une sphère de Poincaré dans laquelle on tient en plus compte du second ordre de la dispersion modale de polarisation (SOPMD pour Second Order PMD en anglais) qui va se rajouter au retard différentiel de groupe.

Sur ces figures 1C et 1D, également obtenues par des simulations confirmées par des résultats expérimentaux dans les mêmes conditions que les figures 1A et 1B, on remarque que la forme des zones de pénalités indiquées en gris foncé s'est déformée.

Plus précisément, on ne retrouve plus des zones de pénalités en forme d'anneaux comme sur les figures 1A et 1B, mais les zones de pénalité (toujours pour des taux d'erreurs binaires dépassant un seuil de l'ordre de $10^{-5}$) se présentent sous une nouvelle forme correspondant à deux taches diamétralement opposées.

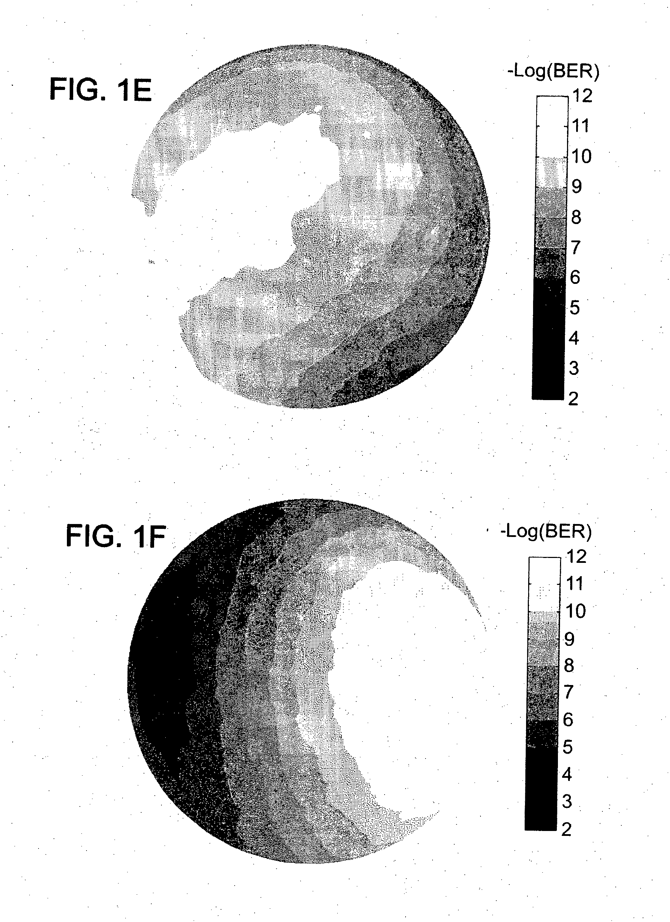

Enfin, les figures **1 E** et **1 F** illustrent une sphère de Poincaré dans laquelle on tient compte non seulement des dispersions modales de premier ordre (DGD) et de deuxième ordre (SOPMD), mais également de la dispersion chromatique.

Dans ce troisième cas de figure, les résultats de simulations illustrés aux figures 1E et 1F, effectuées dans les mêmes conditions que les figures 1A et 1B, révèlent une déformation des zones de pénalités représentées en gris foncé qui se réduisent maintenant à une seule tache sur la sphère de Poincaré, et ce toujours pour des taux d'erreurs binaires dépassant un seuil de l'ordre de $10^{-5}$.

Dans ces conditions, la solution de compensation de la présente invention consiste à installer, au début de la liaison optique, un dispositif de compensation de dispersion modale de polarisation arrangé pour brouiller la polarisation des signaux optiques transmis dans la liaison optique (« Polarization scrambling » en anglais), en changeant la polarisation d'entrée de liaison optique de tels signaux optiques, de façon déterministe et de préférence suffisamment rapidement pour éviter autant que possible de se retrouver dans une zone de pénalités sur la sphère de Poincaré telle que décrite ci-avant, et donc de minimiser au maximum la probabilité de subir des erreurs de transmission. Un tel dispositif est par exemple un brouilleur en Niobate de Lithium (LiNbO3).

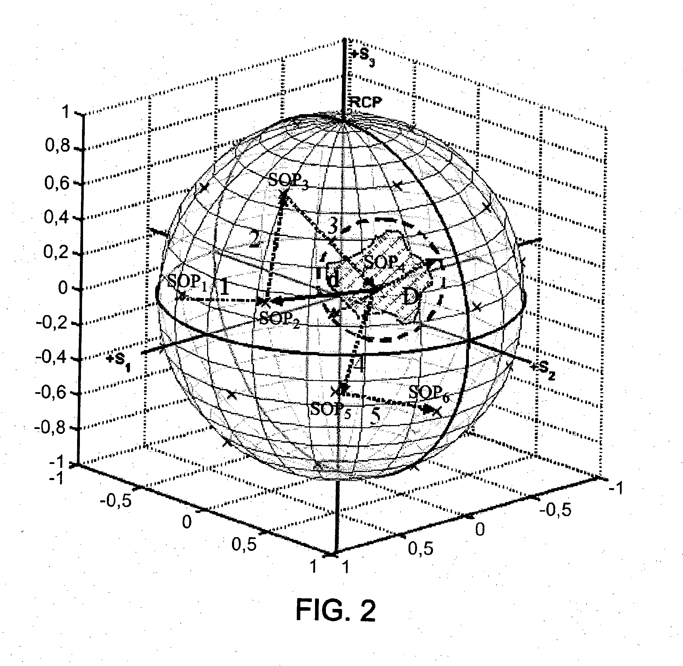

Le principe de la présente invention est illustré plus en détail sur la **figure 2**, laquelle représente une sphère de Poincaré présentant une zone de pénalités unique à éviter autant que possible pour diminuer la probabilité d'erreurs.

Sur cette figure 2, la zone de pénalités est formée d'une unique tache, à l'instar du cas illustré aux figures 1E et 1F pour lequel on tient compte des dispersions modales de polarisation de premier et deuxième ordre ainsi que d'une dispersion chromatique non nulle.

La limite de cette zone de pénalités est définie comme étant l'ensemble des états de polarisation d'entrée de liaison optique, représentés sur la sphère de Poincaré, entraînant un taux d'erreurs binaires correspondant à un seuil acceptable de taux d'erreurs binaires.

Tous les points de la sphère de Poincaré situés en dehors de cette limite correspondent à des états de polarisation entraînant des taux d'erreurs binaires inférieurs à ce seuil acceptable de taux d'erreurs binaires, et inversement tous les points de la sphère de Poincaré situés dans la zone de pénalités délimitée par cette limite correspondent à des états de polarisation entraînant des taux d'erreurs binaires supérieurs à ce seuil acceptable de taux d'erreurs binaires, et donc à éviter autant que possible.

La limite de la zone de pénalités, et donc la taille de la zone de pénalités, dépend du niveau de dispersion modale de polarisation affectant la fibre optique considérée. Plus le niveau de dispersion modale de polarisation affectant la fibre optique est élevé, plus grande sera la zone de pénalités à éviter, et réciproquement.

A titre purement illustratif, un seuil acceptable de taux d'erreurs binaires peut être par exemple de $10^{-6}$ ou $10^{-7}$. Ce seuil acceptable de taux d'erreurs binaires peut être défini, par exemple, en fonction du nombre d'erreurs considéré comme acceptable par l'opérateur du système de transmission.

En particulier, dans la mesure où un code correcteur d'erreurs est employé pour coder les données transmises sur le signal optique multicanaux, ce seuil acceptable de taux d'erreurs peut être défini comme étant le taux d'erreurs binaires correspondant à la limite de correction du code correcteur d'erreurs utilisé, c'est-à-dire comme étant la valeur maximale de taux d'erreurs admissible à l'entrée d'un décodeur pour garantir des taux d'erreurs binaires inférieurs à une certaine limite en sortie de ce décodeur (par exemple $10^{-15}$, soit moins d'une erreur par jour).

Ainsi, plus le code correcteur d'erreurs employé est puissant, plus élevée sera la valeur du seuil acceptable de taux d'erreurs binaires, et plus la zone de pénalités sera petite sur la sphère de Poincaré.

A titre purement illustratif, lorsqu'un code correcteur d'erreurs de type Reed-Solomon RS(255,239) est employé la valeur seuil de taux d'erreurs binaires acceptable est de l'ordre de $10^{-4}$ en entrée pour garantir un taux d'erreurs binaires inférieur à $10^{-14}$ en sortie.

Afin de limiter autant que possible la possibilité de se retrouver dans une telle zone de pénalités, l'idée de la présente invention consiste à modifier régulièrement l'état de polarisation en entrée de la liaison optique en obtenant des états de polarisation dont les représentations sur la sphère de Poincaré sont séparées d'une distance d supérieure à une distance minimale D permettant d'éviter de se trouver plusieurs fois dans cette zone de pénalités.

Cette distance D peut être définie comme étant la distance maximale entre deux points distincts parmi l'ensemble des points de la sphère de Poincaré appartenant à la zone de pénalités qui correspond à un seuil acceptable de taux d'erreurs binaires donné. Cette distance minimale D dépend ainsi de ce seuil acceptable de taux d'erreurs binaires donné.

Pour mieux visualiser cette distance minimale D sur la figure 2, on peut définir un cercle de pénalités correspondant sensiblement au cercle minimal circonscrivant l'ensemble de la zone de pénalités à éviter. Ce cercle minimal peut être calculé comme étant le cercle passant par les deux points les plus éloignés de la zone de pénalités correspondant à un certain seuil acceptable de taux d'erreurs binaires.

Le diamètre de ce cercle de pénalité correspond alors à la distance minimale D à respecter, entre deux états successifs de polarisation sur la sphère de Poincaré, afin d'éviter de retomber dans la zone de pénalités.

Ceci est illustré sur la figure 2, où le passage entre différents états de polarisation successifs est indiqué par des flèches: On voit bien dans cet exemple que, dans la mesure où la distance d entre les différents états de polarisation successifs est supérieure au diamètre D du cercle de pénalités circonscrivant la zone de pénalités à éviter, bien qu'il soit possible de se trouver une fois dans la zone de pénalités (après la troisième modification de l'état de polarisation dans l'exemple de la figure 2), une telle situation n'arrive en principe pas plus d'une fois puisque tous les états de polarisation autres que celui se trouvant dans la zone de pénalités sont distants de ce dernier d'une distance supérieure au diamètre D et se situent donc en dehors du cercle de pénalités.

On évite ainsi de se retrouver pendant une trop longue durée dans la zone de pénalités, ce qui entraînerait un nombre trop élevé d'erreurs.

Un mode de réalisation particulièrement avantageux, car facile d'implémentation, permettant d'obtenir des états de polarisation respectant le critère ci-avant consiste à choisir un certain nombre de points distribués de façon équidistante sur la sphère de Poincaré, en faisant en sorte que la distance d entre ces points soit supérieure à la distance minimale D représentée sur la sphère de Poincaré par le diamètre du cercle de pénalités. C'est le cas illustré sur la figure 2, où six points sont représentés.

Il convient cependant de noter ici que, dans la mesure où la zone de pénalités n'a pas forcément une position fixe sur la sphère de Poincaré, il peut exister des situations où même en appliquant la méthode ci-avant, on obtienne plusieurs états de polarisation se trouvant dans une zone mouvante de pénalités.

Pour éviter autant que possible une telle situation, une vitesse de brouillage suffisamment rapide peut être choisie, de façon à ce que la zone de pénalités puisse être considérée comme fixe le temps de parcourir (au moins une fois) toute la sphère de Poincaré.

Une fois les états de polarisation respectant le critère ci-avant déterminés, les paramètres de commande à appliquer à un contrôleur de polarisation pour obtenir de tels états de polarisation peuvent être déduits et mémorisés, avant d'être appliqués séquentiellement au contrôleur de polarisation pour obtenir concrètement la compensation désirée.

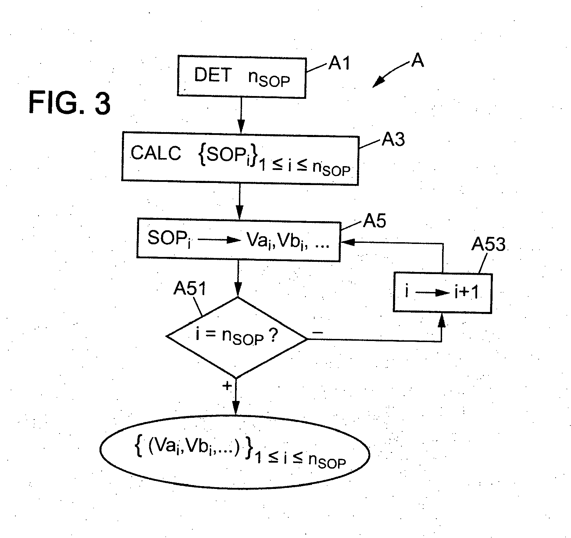

On se réfère maintenant à la **figure 3**, laquelle illustre en détail les étapes d'un procédé de calcul d'une série de paramètres de commande à appliquer à un contrôleur de polarisation afin de compenser la dispersion modale de polarisation affectant un signal optique traversant une liaison optique.

Ce procédé de calcul comporte une première étape de calcul (étape A3) d'une pluralité d'états de polarisation $SOP_i$ dont les représentations respectives sur une sphère de Poincaré sont séparées les unes des autres d'une distance d supérieure à une distance minimale D dépendant d'un seuil acceptable de taux d'erreurs binaires.

A l'issue de cette première étape de calcul, un certain nombre $n_{SOP}$ d'états de polarisation $SOP_i$ distincts sont obtenus, ces $n_{SOP}$ états de polarisation $SOP_i$ respectant un critère permettant de minimiser la probabilité de rester en permanence dans une zone présentant des taux d'erreurs binaires élevés en sortie de fibre optique, et donc de minimiser la probabilité d'erreurs induite par la transmission dans la liaison optique.

Suite à cette première étape de calcul A3, une série d'étapes d'association A5 est effectuée, pour chacun des états de polarisation $SOP_i$ calculés lors de l'étape A3 (ce qui est symbolisé par la boucle d'itération A51 et A53), afin d'associer un ou plusieurs paramètre(s) de commande à appliquer au contrôleur de polarisation avec chaque état de polarisation calculé $SOP_i$.

Chacune de ces étapes d'association A5 comprend le calcul, pour chaque état de polarisation $SOP_i$ calculé lors de l'étape A3, d'au moins un ensemble de paramètre(s) de commande à appliquer au contrôleur de polarisation, en fonction de l'état de polarisation à son entrée, afin d'obtenir l'état de polarisation $SOP_i$ calculé à la sortie du contrôleur de polarisation. Selon le type de contrôleur de polarisation employé, un seul paramètre de commande $Va_i$ peut être calculé, voire plusieurs paramètres $Va_i$, $Vb_i$, etc.

Ainsi, à l'issue de la série d'étapes d'association A5 effectuée pour chacun des $n_{SOP}$ états de polarisation $SOP_i$ distincts, on obtient un ensemble de paramètres de commande $\{(Va_i, Vb_i, ...)\}_{1 \leq i \leq SOP}$ rassemblant, pour chaque état de polarisation $SOP_i$ distinct, un ou plusieurs paramètres de commande à appliquer successivement au contrôleur de polarisation pour obtenir en sortie du contrôleur de polarisation les différents états de polarisation $SOP_i$ calculés au cours de l'étape A3.

Dans un mode particulier de réalisation, le procédé de calcul A comprend une étape préalable A1 de détermination du nombre $n_{SOP}$ d'états de polarisation à calculer en fonction de la distance minimale D.

Dans ce mode de réalisation, la première étape A3 de calcul d'une pluralité d'états de polarisation comprend alors avantageusement le calcul de $n_{SOP}$ états de polarisation distincts présentant des représentations sensiblement équidistantes sur la sphère de Poincaré, c'est-à-dire où les représentations respectives des $n_{SOP}$ états de polarisation calculés forment un maillage sur la sphère de Poincaré dans lequel les points voisins de ce maillage sont sensiblement séparés par une distance d, comme représenté sur la figure 2.

Il peut être ici particulièrement avantageux de calculer les $n_{SOP}$ états de polarisation distincts de sorte à ce que leurs représentations respectives soient distribuées sur l'ensemble de la sphère de Poincaré. D'une part, un tel calcul peut être fait simplement à partir du seul nombre $n_{SOP}$. D'autre part, le fait de distribuer les états de polarisation au maximum sur la sphère de Poincaré permet de réduire la probabilité de choisir un état de polarisation tombant accidentellement dans une zone de pénalité.

Pour cela, on peut utiliser des tables de codes sphériques telles que décrites dans l'article « Tables of Spherical Codes » de N.J.A. Sloane et al. De telles tables donnent la position d'un nombre de points équidistants (c'est-à-dire où les points voisins sont séparés d'une même distance) distribués sur l'ensemble d'une sphère en fonction de ce seul nombre de points.

Ces tables peuvent donc être utilisées pour définir $n_{SOP}$ points équidistants et distribués sur l'ensemble de la sphère Poincaré et en déduire les $n_{SOP}$ états de polarisation $SOP_i$ dont les représentations respectives correspondent à ces points.

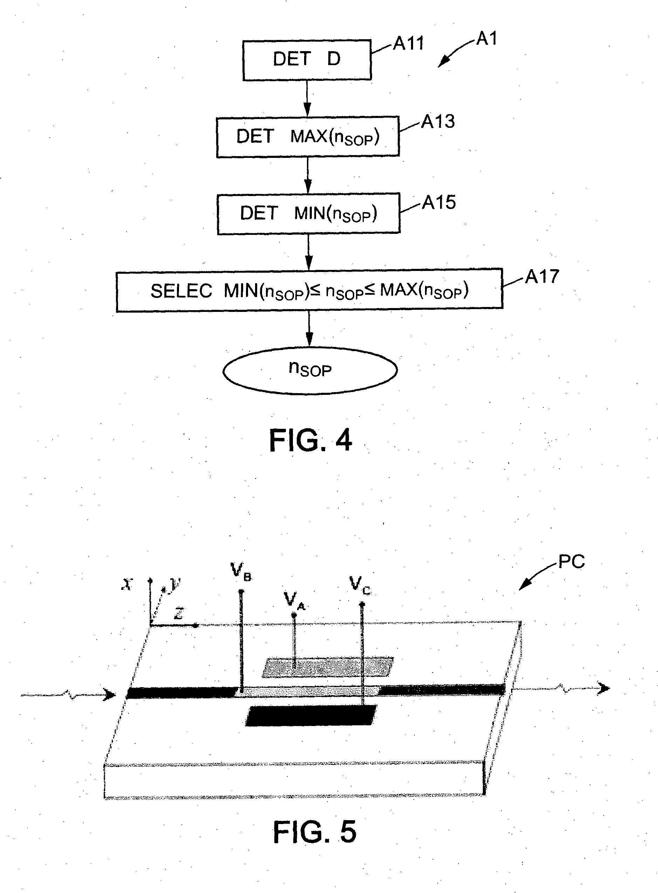

La **figure 4** illustre les sous-étapes constitutives de l'étape de détermination du nombre $n_{SOP}$ d'états de polarisation à calculer ci-avant, selon un mode particulier de réalisation, lorsque l'on cherche à obtenir $n_{SOP}$ états de polarisation $SOP_i$ dont les représentations respectives sont sensiblement équidistantes sur la sphère de Poincaré.

L'étape A1 de détermination comprend avantageusement une étape préalable de détermination (étape A11) de la distance minimale D correspondant au seuil acceptable de taux d'erreurs binaires à ne pas dépasser.

Une telle distance minimale D peut être déterminée à l'avance, par la mesure de cette distance sur une sphère de Poincaré, obtenue par simulation ou avec des tests expérimentaux, pour une dispersion modale de polarisation donnée. La distance minimale D pourra alors s'appliquer a fortiori à toute fibre optique présentant une dispersion modale de polarisation inférieure ou égale à cette dispersion modale de polarisation donnée dans la mesure où les autres éléments de la liaison sont identiques notamment le code correcteur d'erreurs employé.

Il est possible de déterminer la plus grande dimension de la zone de pénalités sur la sphère de Poincaré. La distance minimale D peut alors correspondre à cette plus grande dimension, voire à une valeur légèrement supérieure afin de se laisser une marge supplémentaire.

Une fois cette distance minimale D connue, il est possible de calculer (étape de calcul A13) un nombre maximum $MAX(n_{SOP})$ d'états de polarisation au-delà duquel le risque de tomber plusieurs fois dans la même zone de pénalités existe.

En effet, plus le nombre $n_{SOP}$ est grand, plus le nombre de points sur la sphère de Poincaré est élevé, et plus petite est la distance d séparant deux états de polarisation voisins au sein du maillage distribué sur l'ensemble de la sphère de Poincaré.

Dans la mesure où cette distance d est choisie pour être supérieure à la distance minimale D, il convient de choisir une nombre $n_{SOP}$ d'états inférieur ou égal à un nombre maximum $MAX(n_{SOP})$ correspondant à un nombre de points d'un maillage équidistant et distribué sur l'ensemble d'une sphère au-delà duquel la distance d entre deux points voisins de ce maillage est inférieure à la distance minimale D.

Une fois ce nombre maximum $MAX(n_{SOP})$ calculé, la sélection (A17) d'un nombre $n_{SOP}$ inférieur ou égal à ce nombre maximum $MAX(n_{SOP})$ peut être effectuée, ce qui permet le calcul d'un nombre d'états de polarisation $SOP_i$ permettant d'éviter de se trouver plusieurs fois dans une même zone de pénalités.

Avec le mode de réalisation décrit ci-avant, il est ainsi possible de calculer des valeurs de paramètres de commande permettant de limiter la probabilité d'avoir des états de polarisation en entrée de liaison optique entraînant des taux d'erreurs binaires trop élevés. Cependant, dans la plupart des applications, un code correcteur d'erreurs est utilisé pour encoder les données transmises sur le signal optique afin de chercher à parvenir à une transmission quasiment sans erreur, c'est-à-dire à une transmission présentant un taux d'erreurs binaires de l'ordre de $10^{-15}$.

Dans un tel mode de réalisation où l'on emploie un code correcteur d'erreurs, il est avantageux de faire en sorte de ne pas rester trop longtemps dans un même état de polarisation, afin d'éviter d'augmenter sensiblement la probabilité d'engendrer des taux d'erreurs binaires excédant la capacité de correction du code d'erreurs, ce qui empêcherait d'atteindre l'objectif d'une transmission quasiment sans erreur.

Afin de satisfaire cette deuxième contrainte, l'étape A1 de détermination du nombre $n_{SOP}$ comporte avantageusement une étape A15 supplémentaire de calcul d'un nombre minimum $MIN(n_{SOP})$ de points sur la sphère de Poincaré en-dessous duquel un état de polarisation entraînant un taux d'erreurs binaires dépassant la capacité de correction du code correcteur d'erreurs risque d'être obtenu.

En particulier, lorsque le signal optique transporte une ou plusieurs trames de données comportant chacune un nombre $n_{bits}$ de bits, le calcul du nombre minimum $MIN(n_{SOP})$ d'états de polarisation à calculer est effectué en fonction du nombre $n_{bits}$ de bits d'une trame et de la capacité $Cap_{cod}$ de correction du code correcteur d'erreurs.

Ce nombre minimal $MIN(n_{SOP})$ peut ainsi avantageusement être calculé au moyen de l'équation suivante :

$$MIN(n_{SOP}) = E\ (n_{bits}\ /\ Cap_{cod})$$

où $E(x)$ désigne la partie entière de x.

Dans un tel cas, le nombre $n_{SOP}$ est alors sélectionné en outre, au cours de l'étape, de sélection A17, pour être supérieur ou égal audit nombre minimum $MIN(n_{SOP})$.

En d'autres termes, le nombre $n_{SOP}$ d'états à calculer peut être choisi de sorte à ce que :

$$MIN(n_{SOP}) \leq n_{SOP} \leq MAX(n_{SOP})$$

A titre d'exemple, afin de mieux illustrer ce dernier aspect de la présente invention, on peut se placer dans le cas où un code correcteur d'erreurs standard de type Reed-Solomon RS(255,239) est employé pour encoder les données transportées par le signal optique multicanaux.

Un signal typique de données est alors composé d'une trame construite par l'entrelacement de 16 sous-trames de 255 octets, le nombre total de bits dans la trame étant alors de $n_{bits}=255*8*16=32640$ bits et la durée $\tau_{bit}$ de chaque bit étant par exemple de 93,4 ps pour un débit de symbole binaire égal à 10,7 Gbit/s.

Avec un tel code Reed-Solomon standard RS(255,239), la capacité de correction par sous-trame est de 8 octets, ce qui nous donne une capacité $Cap_{cod}$ de correction, pour corriger un nombre de bits erronés consécutifs, de $Cap_{cod} = 8*8*16-7=1017$ bits.

Avec ces paramètres, le nombre minimum $MIN(n_{SOP})$ vaut $E(32640/1017)=32$, et il convient alors de choisir un nombre $n_{SOP}$ supérieur ou égal à 32 états de polarisation distincts sur la sphère de Poincaré.

Il est alors possible à ce stade de vérifier si un tel maillage de 32 points sensiblement équidistants et distribués uniformément sur l'ensemble de cette sphère, calculé par exemple grâce à l'une des tables sphériques possibles pour 32 points telles que définies dans l'article « Tables of Spherical Codes » de N.J.A. Sloane et al. cité précédemment, remplit également l'autre condition selon laquelle la distance d entre deux points voisins est supérieure à une distance D minimale correspondant à un seuil acceptable de taux d'erreurs binaires donné.

Si tel est le cas, le maillage de 32 points sensiblement équidistants et distribués sur la sphère de Poincaré peut être utilisé pour retrouver les valeurs de paramètres de commande à appliquer à un contrôleur de polarisation, afin de faire en sorte que le signal optique présente successivement chacun des 32 états de polarisation $SOP_i$ représentés par les points de ce maillage en sortie d'un contrôleur de polarisation placé en début de liaison optique.

L'association permettant ensuite de retrouver les valeurs des paramètres de commande à appliquer à partir des états de polarisation $SOP_i$ souhaités peut être effectuée grâce à une matrice de Jones caractérisant le contrôleur de polarisation employé, dans un mode particulier de réalisation.

Dans ce mode particulier de réalisation, le paramètre de commande correspond alors à une tension de commande et l'association est réalisée par calcul, au moyen de la matrice de Jones associée au contrôleur de polarisation employé, comme cela est maintenant expliqué en relation avec la figure 5.

Afin de mieux illustrer une telle association de valeurs de tensions de commande à appliquer avec des états de polarisation, on se réfère maintenant à la **figure 5**, laquelle illustre un exemple de contrôleur de polarisation utilisable dans un dispositif de compensation selon la présente invention.

En particulier, un contrôleur de polarisation permettant le brouillage déterministe décrit ci-avant peut être réalisé en Niobate de Lithium LiNbO3.

Ce contrôleur de polarisation est composé d'un certain nombre d'étages représentant une lame à retard de phase $\delta$ et un angle d'orientation $\alpha/2$. Les valeurs de $\delta$ et de $\alpha/2$ sont ajustables et contrôlées par les tensions $V_A$, $V_B$ et $V_C$ appliquées sur le contrôleur de polarisation.

Les relations entre les paramètres $\alpha$ et $\delta$ et les tensions appliquées peuvent respecter les équations typiques suivantes :

$$(1) \qquad V_A = 2V_0 \cdot \delta \cdot \sin(\alpha) - V_\pi \cdot \delta \cdot \cos(\alpha) + V_{A,Bias}$$

$$(2) \qquad V_B = 0 \text{ (Masse)}$$

$$(3) \qquad V_C = 2V_0 \cdot \delta \cdot \sin(\alpha) + V_\pi \cdot \delta \cdot \cos(\alpha) + V_{C,Bias}$$

Dans lesquelles :

- $V_\pi$ est la tension requise pour introduire un déphasage de 180° entre le mode TE et le mode TM, le mode TE étant le mode transverse électrique et le mode TM étant le mode transverse magnétique perpendiculaire à TE au sens de la théorie des ondes électromagnétiques ;
- $V_0$ est la tension requise pour faire transformer le mode TE en mode TM et inversement ;
- $V_{A,Bias}$ et $V_{C,Bias}$ sont les tensions requises pour annuler la biréfringence entre les modes TE et TM ;
- $\delta$ est la valeur du déphasage induite par le contrôleur de polarisation pour générer une lame quart d'onde, il faut un $\delta=1/4$.
- $\alpha/2$ est l'angle d'orientation de notre lame.

Si l'on définit alors $V_A' = V_A - V_{A,Bias}$ et $V_C' = V_C - V_{C,Bias}$, il est possible de déduire les deux équations suivantes à partir des équations (1) et (3) :

$$(4) \qquad \alpha = arc\, tg\left( \frac{V_\pi}{2V_0} \cdot \frac{V_C' + V_A'}{V_C' - V_A'} \right)$$

$$\delta = \sqrt{\frac{(V_C{}'+V_A{}')^2}{16\cdot V_0^2} + \frac{(V_C{}'-V_A{}')^2}{4\cdot V_\pi^2}}$$

(5)

Les équations (4) et (5) permettent de calculer le déphasage et l'orientation de la lame en fonction des tensions appliquées sur le contrôleur de polarisation, donc la fonction de transfert de ce contrôleur de polarisation.

La nature vectorielle de l'état de polarisation (SOP) rend appropriée l'utilisation d'une représentation matricielle de cet état de polarisation. Le formalisme de Jones permet de décrire l'état de polarisation de la lumière et son évolution à travers un système optique, au moyen de la matrice de Jones.

Le vecteur de Jones pour une onde polarisée se propageant suivant un axe z est défini par un vecteur colonne tel que :

$$\begin{pmatrix} Ex(t) \\ Ey(t) \end{pmatrix} = \begin{pmatrix} E_{0x}e^{j\omega t} \\ E_{0y}e^{(j\omega t - \varphi)} \end{pmatrix}$$

où $Ex(t)$ et $Ey(t)$ sont les composantes du champ électrique de l'onde selon les axes x et y.

La propagation d'une onde dans un milieu biréfringent affecte son état de polarisation. Cette variation dépend du milieu de transmission (déphaseur, polariseur, guide...). En utilisant la représentation de Jones, on peut donc écrire :

$$\begin{pmatrix} \underline{E}_x^{(out)} \\ \underline{E}_y^{(out)} \end{pmatrix} = \begin{bmatrix} J_{11} & J_{12} \\ J_{21} & J_{22} \end{bmatrix} \begin{pmatrix} \underline{E}_x^{(in)} \\ \underline{E}_y^{(in)} \end{pmatrix}$$

où les coefficients $J_{xx}$ sont les coefficients complexes de la matrice de Jones du milieu biréfringent.

Ainsi, pour le contrôleur de polarisation de la figure 4, la matrice de Jones d'un étage s'exprime par l'équation suivante :

(6)
$$J(\delta,\alpha/2) = \begin{pmatrix} \cos(\delta/2) + i.\cos(\alpha).\sin(\delta/2) & i.\sin(\alpha).\cos(\delta/2) \\ i.\sin(\delta).\sin(\delta/2) & \cos(\delta/2) - i.\cos(\alpha).\sin(\delta/2) \end{pmatrix}$$

A partir des équations (4), (5) et (6), on peut donc calculer la matrice de Jones du contrôleur de polarisation de la figure 5 en fonction des tensions appliquées $Va$ et $Vc$.

Une fois cette matrice de Jones calculée, il est alors possible, avec la connaissance de l'état de polarisation à l'entrée du contrôleur de polarisation, de calculer les valeurs de tension à appliquer pour obtenir un état de polarisation déterminé souhaité en sortie du contrôleur de polarisation.

Dans un mode de réalisation avantageux où des fibres à maintien de polarisation sont utilisées en amont du contrôleur de polarisation, il est possible de connaître l'état de polarisation à l'entrée du contrôleur de polarisation. On peut alors en déduire les valeurs de tensions de commande correspondant à chaque état de polarisation SOP désiré en sortie du contrôleur de polarisation. Pour compenser la dispersion modale de polarisation, il suffit donc d'appliquer ces valeurs de tensions de commande pour une durée définie par le temps où il faut rester dans chaque état de polarisation.

Ainsi, pour reprendre l'exemple où il faut déterminer 32 points sur la sphère de Poincaré, c'est-à-dire 32 états de polarisation $SOP_i$ distincts, et qu'un seul étage du contrôleur de polarisation est utilisé, il faut alors déterminer 32 valeurs de tensions pour Va et 32 autres valeurs pour Vc, de sorte qu'on ait deux valeurs $Va_1$ et $Vc_1$ pour $SOP_1$, deux valeurs $Va_2$ et $Vc_2$ pour $SOP_2$, etc.

En d'autres termes, on détermine le tableau de valeurs suivant, qui peut être mémorisé dans un module de pilotage du contrôleur de polarisation pour lui appliquer séquentiellement les valeurs de tension de commande :

Tableau 1

| Etat de polarisation | Valeur de tension de commande Va | Valeur de tension de commande Vc |
|---|---|---|
| $SOP_1$ | $Va_1$ | $Vc_1$ |
| ... | ... | ... |
| $SOP_{32}$ | $Va_{32}$ | $Vc_{32}$ |

Les valeurs de tension de commande $Va_1$ et $Vc_1$ sont ainsi appliquées durant une certaine durée, puis les valeurs $Va_2$ et $Vc_2$, et ainsi de suite de façon périodique, c'est-à-dire on recommence à appliquer les valeurs de tensions de commande $Va_1$ et $Vc_1$ après les valeurs $Va_{32}$ et $Vc_{32}$.

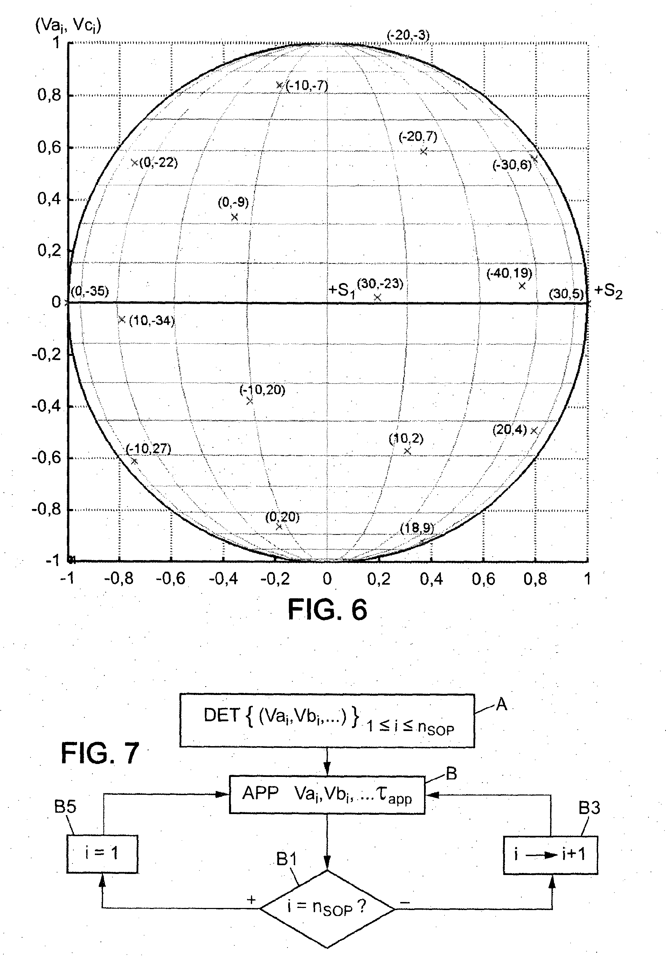

La **figure 6** ci-après donne des exemples de valeurs de tensions de commande $Va_i$ et $Vc_i$ pouvant être appliquées à un contrôleur de polarisation tel que représenté à la figure 5, pour un nombre $n_{SOP}$ égal à 32, afin d'obtenir 32 états de polarisation $SOP_i$, dont les représentations respectives sont réparties de façon équidistante et distribuée sur l'ensemble de la sphère de Poincaré.

Sur cette figure 6 où sont représentés plus particulièrement 16 états de polarisation $SOP_i$, à chacun des 16 points correspondants à l'un de ces états de polarisation $SOP_i$ correspond deux valeurs de tensions $Va_i$ et $Vc_i$.

Il est ici avantageux que deux états successifs $SOP_i$ et $SOP_{i+1}$ dans la série d'états de polarisation à obtenir soient voisins dans le maillage de la sphère de Poincaré, ceci afin d'avoir des variations des valeurs de tensions limitées et aussi éviter de traverser la zone de pénalités lors du passage d'un état de polarisation à un autre.

Il est ici souligné que la figure 5 représente un contrôleur de polarisation commandé à l'aide de tensions de commande. D'autres modes de réalisation basés sur d'autres types de contrôleur de polarisation sont également envisageables. A titre d'exemple non limitatif, on peut citer un contrôleur de polarisation composé d'un matériau acousto-optique, contrôlé à l'aide d'un signal de commande sinusoïdal RF appartenant à une plage de fréquences donnée. Il suffit alors d'associer à un état de polarisation une valeur du paramètre de commande permettant d'obtenir cet état de polarisation en sortie de ce contrôleur de polarisation.

On se réfère maintenant à la **figure 7**, laquelle illustre un procédé de compensation de la dispersion modale de polarisation affectant un signal optique, par exemple multicanaux, lors de sa transmission dans une liaison optique selon la présente invention.

Ce procédé de compensation utilise une série de paramètres de commande calculés au moyen du procédé de calcul décrit ci-avant.

Ainsi, ce procédé de compensation comprend une première phase A de calcul d'une série de valeurs $Va_i$, $Vb_i$, etc. de paramètres de commande, à appliquer à un contrôleur de polarisation pour obtenir en sortie de ce contrôleur une série d'états de polarisation permettant de compenser la dispersion modale de polarisation affectant le signal optique multicanaux lors de la traversée d'une liaison optique, cette série de valeurs de paramètres de commande étant calculée grâce au procédé de calcul présenté ci-avant.

Une fois cette série de valeurs $Va_i$, $Vb_i$, etc. calculée, le procédé de compensation comprend l'application successive (B) des valeurs respectives de paramètres de commande à un contrôleur de polarisation situé en amont de la liaison optique à compenser.

Ainsi, lorsqu'il faut obtenir $n_{SOP}$ états de polarisation prédéterminés en sortie du contrôleur de polarisation et que celui-ci est contrôlé au moyen de deux valeurs distinctes de paramètres de commande $Va_i$, et $Vb_i$, le procédé comprend $n_{SOP}$ étapes successives d'application de séries de paramètres de commande $(Va1,Vb_1),...,(Va_{nSOP},Vb_{nSOP})$, ce qui est symbolisé sur la figure 7 par une boucle d'itération comprenant, pour une certaine variable i donnée, la vérification qu'un nombre $n_{SOP}$ étapes successives d'application est atteint (étape B1), suivie du retour à l'étape d'application suivante pour cette variable i incrémentée (étape B3), si tel n'est pas le cas.

Lorsque les $n_{SOP}$ étapes successives d'application des paramètres de commande prédéterminées ont été réalisées, il est possible de recommencer la phase B d'application successive en recommençant à partir des premiers paramètres de commande $Va_i$, $Vb_i$,..., ce qui est symbolisé sur la figure 7 par la boucle B5 de retour à la première des étapes B d'application.

Les $n_{SOP}$ états de polarisation calculés lors de la phase A sont ainsi obtenus en boucle afin de maintenir le processus de compensation pendant une durée de temps suffisamment longue.

Dans la mesure où le signal optique transporte une ou plusieurs trames de données, il est particulièrement avantageux ici, pour chaque étape B d'application de paramètres de commande $Va_i$, $Vb_i$,..., d'appliquer ces paramètres pendant une durée $\tau_{app}$ d'application déterminée de sorte à ce que tous les états de polarisation $SOP_i$ calculés soient obtenus successivement, une seule fois, pendant la durée d'une trame de données.

En effet, si la durée d'application diminue trop fortement, un même état de polarisation $SOP_i$ problématique

peut être obtenu deux fois (voire plus) pendant une même trame, ce qui peut engendrer des taux d'erreurs binaires impossibles à compenser avec le code correcteur d'erreurs.

Pour ce faire, la durée $\tau_{app}$ d'application des paramètres de commande est déterminée avantageusement en fonction du nombre de bits $n_{bits}$ d'une trame et du nombre $n_{SOP}$ d'états de polarisation calculés.

En particulier, cette durée peut être calculée au moyen de l'équation suivante :

$$\tau_{app} = (n_{bits} / n_{SOP}) * \tau_{bit}$$

où $\tau_{bit}$ correspond à la durée d'un bit de la trame.

En reprenant l'exemple précédemment décrit, la durée $\tau_{app}$ d'application est ainsi de 95 ns (95 ns = (32640/32) * 93.4 ps pour un débit de 10,7 Gbit/s) dans chacun des états de polarisation $SOP_i$ à obtenir.

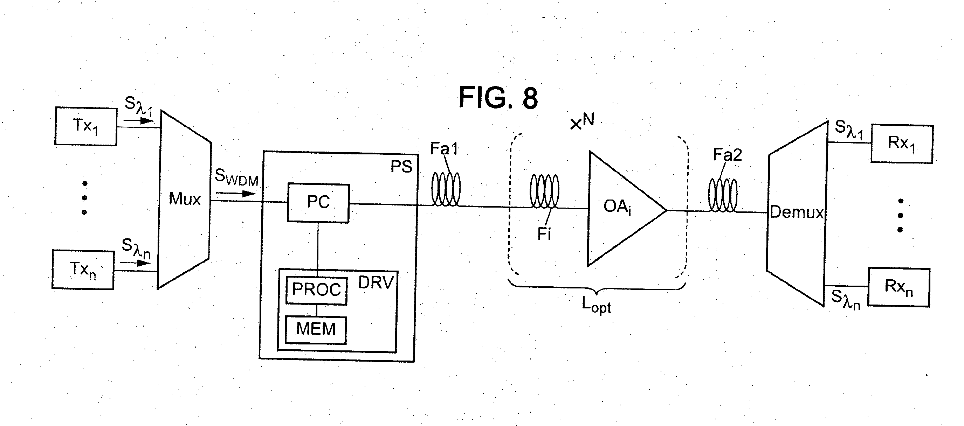

On se réfère maintenant à la **figure 8** qui illustre un système de transmission WDM comprenant un dispositif de compensation PS selon la présente invention, un tel dispositif de compensation PS mettant en oeuvre le procédé de compensation tel qu'illustré à la figure 5 en utilisant des paramètres de commande calculés selon le procédé de calcul tel qu'illustré à la figure 3.

Sur cette figure 8, un nombre n d'émetteurs optiques $TX_1$,..,$TX_n$ émettent respectivement n signaux optiques $S_{\lambda 1}$,..., $S_{\lambda n}$, modulés respectivement sur n longueurs d'onde distinctes $\lambda 1$,...,$\lambda n$, lesquels signaux sont multiplexés au sein d'un multiplexeur en longueur d'onde Mux afin de fournir un signal optique multicanaux $S_{WDM}$ apte à être transmis sur une liaison optique $L_{opt}$ comprenant au moins une fibre optique, voire typiquement une succession de N tronçons optiques composées de fibres optiques $F_i$ et d'amplificateurs optiques $OA_i$ servant à maintenir la puissance du signal optique à un niveau suffisant lorsqu'il traverse cette liaison optique.

A la sortie de cette liaison optique, un démultiplexeur en longueur d'onde Demux démultiplexe le signal multicanaux en n signaux optiques $S_{\lambda 1}$,..., $S_{\lambda n}$ qui peuvent être reçus individuellement respectivement par chacun des récepteurs optiques $Rx_1$,...,$Rx_n$.

Le dispositif de compensation de polarisation PS selon la présente invention comporte un contrôleur de polarisation PC inséré à la sortie du multiplexeur Mux, avant l'entrée de la liaison optique $L_{opt}$, ce contrôleur de polarisation servant à brouiller de manière déterministe l'état de polarisation du signal optique multicanaux entrant dans la liaison optique de la façon indiquée précédemment.

Le dispositif de compensation de polarisation PS selon la présente invention comporte également un module DRV de pilotage du contrôleur de polarisation PC, apte à envoyer des paramètres de commande spécifiques au contrôleur de polarisation PC, par exemple au moyen d'un module de traitement PROC comprenant par exemple un processeur, afin de le piloter et de modifier l'état de polarisation du signal optique $S_{WDM}$ traversant ce contrôleur de polarisation avant son entrée dans la liaison optique $L_{opt}$.

Pour ce faire, le module de commande DRV comporte avantageusement des moyens de mémorisation MEM dans lesquels est enregistrée une pluralité de valeurs de paramètres de commande à appliquer au contrôleur de polarisation, cette pluralité de valeurs de paramètres de commande étant obtenue au moyen du procédé de calcul décrit précédemment.

Il est ici souligné que la figure 8 illustre un système de transmission WDM. Aucune limitation n'est attachée à ce type de transmission, l'invention étant également applicable à un système de transmission monocanal comprenant un dispositif de compensation PS selon la présente invention.

Par ailleurs, comme illustré aux figures 1E-1F, le fait d'avoir un certain niveau de dispersion chromatique résiduelle résulte en ce qu'une unique zone de pénalités est présente sur la sphère de Poincaré, au lieu de deux zones de pénalités opposées lorsqu'il n'y a pas de dispersion chromatique résiduelle.

Généralement, les canaux optiques $\lambda_1$,..., $\lambda_n$ transmis dans un système WDM présentent, en fin de liaison optique, une dispersion chromatique résiduelle non nulle. Mais dans certains cas, il est possible que cette dispersion chromatique résiduelle soit nulle, ce qui peut entraîner la présence de deux zones de pénalités opposées au lieu d'une seule, et ainsi augmenter le risque d'utiliser des états de polarisation tombant dans une zone à taux d'erreurs binaires élevé.

Cela peut être en particulier le cas avec des liaisons WDM récentes à 10Gbits/s utilisant des fibres compensatrices de dispersion chromatique (par exemple des fibres à dispersion négative) pour compenser tous les canaux de la liaison en même temps. Dans de telles liaisons WDM, il peut rester une dispersion chromatique résiduelle sur les canaux en fin de liaison, mais celle-ci est alors différente sur les différents canaux et peut être insuffisante pour donner lieu à la formation d'une seule zone de pénalité sur la sphère de Poincaré.

Afin d'éviter cette situation, il est avantageux de garantir un certain niveau de dispersion chromatique résiduelle à la sortie de la liaison optique $L_{opt}$. Pour cela, le système de transmission optique comprend avantageusement au moins une fibre optique additionnelle dont la longueur est déterminée de sorte à ce que le niveau de dispersion chromatique résiduelle en sortie de la liaison optique $L_{opt}$ dépasse un seuil prédéterminé de dispersion chromatique qui peut être de l'ordre de 500 ps/nm, afin de garantir que la zone de pénalités se présente sous la forme d'une tache unique sur la sphère de Poincaré mais ne soit pas non plus trop importante pour ne pas entraîner de pénalité de transmission additionnelle.

Une telle fibre additionnelle peut être insérée avant la liaison optique $L_{opt}$, comme illustré par la fibre additionnelle Fa1, ou après cette liaison optique $L_{opt}$, comme illustré par la fibre additionnelle Fa3. Il est également possible d'insérer deux fibres additionnelles Fa1, Fa3 avant et après la liaison optique $L_{opt}$ pour obtenir une telle dispersion chromatique résiduelle.

De plus, il peut être avantageux d'utiliser des émetteurs optiques $Tx_1,...,Tx_n$ et un multiplexeur optique Mux réalisés avec des composants à maintien de polarisation, afin d'avoir un signal multicanaux $S_{WDM}$ présentant une polarisation fixe et connue à l'entrée du contrôleur de polarisation PC pour toutes les longueurs d'onde $\lambda_1,..., \lambda_n$, ce qui permet de bien contrôler les états de polarisation en sortie de ce contrôleur de polarisation PC.

La présente invention concerne également un programme d'ordinateur comprenant des instructions de code permettant la mise en oeuvre des étapes du procédé de calcul tel qu'illustré à la figure 3, lorsqu'il est chargé et exécuté sur un module de calcul pouvant prendre la forme d'un processeur de données ou d'un ordinateur.

La présente invention concerne par ailleurs un programme d'ordinateur comprenant des instructions de code permettant la mise en oeuvre des étapes du procédé de compensation tel qu'illustré à la figure 7, dans un dispositif de compensation de dispersion modale de polarisation, notamment dans le module de pilotage DRV décrit en relation avec la figure 8 lequel peut prendre la forme d'un processeur de données ou d'un ordinateur.

Ces programmes d'ordinateur peuvent utiliser n'importe quel langage de programmation, et être sous la forme d'un code source, code objet, ou de code intermédiaire entre code source et code objet, tel que dans une forme partiellement compilée, ou dans n'importe quelle autre forme souhaitable.

L'invention vise aussi un support d'informations lisible par un ordinateur ou un processeur de données, et comportant les instructions d'un programme d'ordinateur tel que mentionné ci-dessus. Un tel support d'informations peut être n'importe quelle entité ou dispositif capable de stocker le programme. Par exemple, le support peut comporter un moyen de stockage, tel qu'une ROM, par exemple un CD-ROM ou une ROM de circuit microélectronique, ou encore un moyen d'enregistrement magnétique, par exemple une disquette ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

Bien entendu, la présente invention ne se limite pas aux formés de réalisations décrites ci-avant à titre d'exemple et peut s'étendre à d'autres variantes sans pour autant sortir du cadre de l'invention.

Ainsi, il peut être avantageux d'utiliser un code « Super-FEC » construit à base de deux codes concaténés selon la terminologie découlant de la norme ITU-T G.975.1

- un code « interne » permettant de corriger les erreurs individuelles et apte à réduire la taille de la zone de pénalités sur la sphère de Poincaré, et donc à réduire la distance minimale D ; et
- un code « externe », par exemple de type Reed-Solomon, connu pour sa capacité de correction des blocs d'erreurs.

Une telle combinaison de codes permet de réduire encore plus les probabilités d'erreur dans la transmission en combinant la diminution des zones de pénalités et l'utilisation d'un code correcteur d'erreurs pour compenser les blocs d'erreurs typiquement causés par la dispersion modale de polarisation.

A titre purement illustratif, un code interne de type BCH (2047,1952) peut être employé en combinaison avec un code externe de type Reed-Solomon (1023,1007).

Cependant, d'autres codes correcteurs d'erreurs, par exemple tels que ceux cités dans la norme internationale UIT-T G.975.1, peuvent être mis en oeuvre dans un système de transmission WDM selon la présente invention. Un tel code correcteur d'erreur est par exemple un code LDPC de 32640 bits de long, pour « Low Density Parity Check ».

La présente invention est avantageuse en ce que, bien que les positions des zones de pénalités puissent être différentes pour les différents canaux portés par le signal optique multicanaux, les zones de pénalités présentent sensiblement la même forme, du fait que les axes propres de polarisation puissent être différents pour chaque longueur d'onde, ce qui permet à la solution de compensation de la présente invention d'être applicable à un signal optique multicanaux.

La présente invention est également avantageuse en ce qu'elle est indépendante du débit car elle modifie seulement la polarisation des signaux, qui est une caractéristique physique du signal.

La présente invention est en outre avantageuse en ce qu'elle est indépendante du format de modulation employé dans le signal optique, à l'exception bien évidemment des cas de format de modulation faisant appel au multiplexage de polarisation.

Enfin, la présente invention ne nécessite pas de signal de contre-réaction qui impose un délai entre la détection de la dégradation et l'application des bons paramètres dans le dispositif de compensation de la dispersion modale de polarisation.

La présente invention trouve son application dans tous les réseaux équipés de fibre optique ayant un niveau de dispersion modale de polarisation élevé. Une application particulièrement intéressante concerne les réseaux métropolitains pour lesquels le coût des solutions est un paramètre très important.

La présente invention est particulièrement avantageuse lorsque les débits se situent entre 10Gbit/s et 40Gbit/s inclus, car les formats de modulation utilisés à ces débits ne font pas nécessairement appel au multiplexage de polarisation.

Cependant, à des débits supérieurs, i.e. de l'ordre de 100Gbit/s, bien que le multiplexage de polarisation puisse être employé et que d'autres solutions de compensation soient proposées telles que la détection cohérente ou le format OFDM, il est également possible d'utiliser la solution présentée dans la présente demande.

**Revendications**

1. Procédé de calcul d'une série de paramètres de commande à appliquer à un contrôleur de polarisation (PC), agencé pour compenser la dispersion modale de polarisation affectant un signal optique ($S_{WDM}$) traversant une liaison optique ($L_{opt}$) en fonction de paramètres de commande, le procédé comprenant :

   - le calcul (A3) d'une pluralité d'états de polarisation ($SOP_i$) dont les représentations respectives sur une sphère de Poincaré sont séparées les unes des autres d'une distance (d) supérieure à une distance minimale (D) dépendant d'un seuil acceptable de taux d'erreurs binaires ; et
   - pour chaque état de polarisation calculé, l'association (A5) d'au moins un paramètre de commande ($Va_i, Vb_i$) à appliquer au contrôleur de polarisation avec l'état de polarisation calculé ($SOP_i$).

2. Procédé de calcul selon la revendication 1, **caractérisé en ce qu'**il comprend en outre la détermination (A1) d'un nombre $n_{SOP}$ d'états de polarisation distincts à calculer et **en ce que** le calcul de la pluralité d'états de polarisation comprend le calcul de $n_{SOP}$ états de polarisation ($SOP_i$) présentant des représentations sensiblement équidistantes sur la sphère de Poincaré.

3. Procédé de calcul selon la revendication 2, **caractérisé en ce que** les $n_{SOP}$ états de polarisation distincts sont calculés de sorte à ce que leurs représentations respectives soient distribuées sur l'ensemble de la sphère de Poincaré.

4. Procédé de calcul selon la revendication 2 ou 3, **caractérisé en ce que** la détermination du nombre $n_{SOP}$ d'états de polarisation à calculer comprend le calcul (A13) d'un nombre maximum $MAX(n_{SOP})$ d'états de polarisation en fonction de la distance minimale et la sélection (A17) d'un nombre $n_{SOP}$ inférieur ou égal audit nombre maximum $MAX(n_{SOP})$.

5. Procédé de calcul selon la revendication 4, dans lequel le signal optique transporte au moins une trame de données et dans lequel un code correcteur d'erreurs est employé pour coder les données transportées par le signal optique, le procédé étant **caractérisé en ce que** l'étape de détermination du nombre $n_{SOP}$ d'états de polarisation à calculer comprend en outre le calcul (A15) d'un nombre minimum $MIN(n_{SOP})$ d'états de polarisation à calculer en fonction du nombre $n_{bits}$ de bits de la trame et de la capacité $Cap_{cod}$ de correction du code correcteur d'erreurs, le nombre $n_{SOP}$ étant en outre sélectionné pour être supérieur ou égal audit nombre minimum $MIN(n_{SOP})$.

6. Procédé de calcul selon la revendication 5, **caractérisé en ce que** le code correcteur d'erreurs employé est construit au moins à partir de la concaténation d'un premier code interne, apte à réduire la distance minimale (D), et d'un deuxième code correcteur d'erreurs adapté pour la correction de blocs d'erreurs.

7. Procédé de compensation de la dispersion modale de polarisation affectant un signal optique lors de sa transmission dans une liaison optique, **caractérisé par** l'application successive (B) d'une série de paramètres de commande prédéterminés à un contrôleur de polarisation situé en amont de la liaison optique, lesdits paramètres de commande prédéterminés étant calculés (A) au moyen du procédé de calcul selon l'une des revendications 1 à 6.

8. Procédé de compensation selon la revendication 7, dans lequel le signal optique transporte au moins une trame de données, **caractérisé en ce que** les paramètres de commande prédéterminés sont appliqués durant une durée d'application ($\tau_{app}$) déterminée en fonction du nombre $n_{bits}$ de bits de la trame et du nombre $n_{SOP}$ d'états de polarisation.

9. Programme d'ordinateur comprenant des instructions de code pour mettre en oeuvre les étapes du procédé de calcul selon l'une des revendications 1
à 6, lorsqu'il est chargé et exécuté sur un module de calcul.

10. Programme d'ordinateur comprenant des instructions de code pour mettre en oeuvre les étapes du procédé de compensation selon l'une des revendications 7 ou 8, lorsqu'il est chargé et exécuté dans un dispositif de compensation de dispersion modale de polarisation.

11. Dispositif de compensation (PS) de dispersion modale de polarisation comprenant un contrôleur de polarisation (PC) apte à recevoir un signal optique et un module de commande (DRV) arrangé pour appliquer au moins un paramètre de commande au contrôleur de polarisation, ledit dispositif de compensation comprenant des moyens pour mettre en oeuvre le procédé de compensation selon l'une des revendications 7 ou 8.

12. Dispositif de compensation selon la revendication 11, **caractérisé en ce que** le module de commande (DRV) comporte en outre des moyens de mémorisation (MEM) dans lesquels est enregistrée une pluralité de paramètres de commande à appliquer au contrôleur de polarisation, ladite pluralité de paramètres de commande étant obtenue au moyen du procédé de calcul selon l'une des revendications 1 à 6.

13. Système de transmission optique comprenant au moins une liaison optique ($L_{opt}$) traversée par un signal optique ($S_{WDM}$) et un dispositif de compensation (PS) selon l'une des revendications 11 ou 12, ledit dispositif de compensation étant connecté à l'entrée de ladite liaison optique et arrangé pour modifier l'état de polarisation du signal optique avant son entrée dans ladite liaison optique afin de compenser la dispersion modale de polarisation affectant le signal optique lors de la traversée de ladite liaison optique.

14. Système de transmission optique selon la revendication 13, **caractérisé en ce qu'**il comprend en outre au moins une fibre optique additionnelle (Fa1,Fa2) dont la longueur est déterminée de sorte à ce que le niveau de dispersion chromatique résiduelle en sortie de la liaison optique dépasse un seuil prédéterminé de dispersion.

15. Système de transmission optique selon la revendication 13 ou 14, **caractérisé en ce qu'**il comprend en outre une pluralité d'émetteurs optiques ($Tx_1$,$Tx_n$) connectés à un multiplexeur optique (Mux) pour fournir un signal optique multicanaux au dispositif de compensation, la pluralité d'émetteurs optiques et le multiplexeur optique étant réalisés avec des composants à maintien de polarisation.

**Patentansprüche**

1. Berechnungsverfahren einer Reihe von Steuerparametern, die auf eine Polarisationssteuerung (PC) anzuwenden ist, die eingerichtet ist, um die modale Polarisationsdispersion zu kompensieren, die ein optisches Signal ($S_{WDM}$), das eine optische Verbindung ($L_{opt}$) durchquert, in Abhängigkeit von Steuerparametern beeinträchtigt, wobei das Verfahren Folgendes aufweist:

- die Berechnung (A3) einer Mehrzahl von Polarisationszuständen ($SOP_i$), deren jeweilige Darstellungen auf einer Poincare-Kugel voneinander um eine Entfernung (d) getrennt sind, die größer ist als eine Mindestentfernung (D), die von einem akzeptablen Schwellenwert von Bitfehlerraten abhängt, und
- für jeden berechneten Polarisationszustand die Verbindung (A5) mindestens eines Steuerparameters ($Va_i$, $Vb_i$), der auf die Polarisationssteuerung mit dem berechneten Polarisationszustand ($SOP_i$) anzuwenden ist.

2. Berechnungsverfahren nach Anspruch 1, **dadurch gekennzeichnet, dass** es außerdem das Bestimmen (A1) einer Anzahl $n_{SOP}$ getrennter Polarisationszustände aufweist, die zu berechnen sind, und dass die Berechnung der Mehrzahl von Polarisationszuständen die Berechnung von $n_{SOP}$ Polarisationszuständen ($SOP_i$), die im Wesentlichen gleich beabstandete Darstellungen auf der Poincaré-Kugel aufweisen, umfasst.

3. Berechnungsverfahren nach Anspruch 2, **dadurch gekennzeichnet, dass** die $n_{SOP}$ getrennten Polarisationszustände derart berechnet werden, dass ihre jeweiligen Darstellungen auf der gesamten Poincaré-Kugel verteilt sind.

4. Berechnungsverfahren nach Anspruch 2 oder 3, **dadurch gekennzeichnet, dass** die Bestimmung der Anzahl $n_{SOP}$ zu berechnender Polarisationszustände die Berechnung (A13) einer maximalen Anzahl MAX ($n_{SOP}$) von Polarisationszuständen in Abhängigkeit von der Mindestentfernung und der Auswahl (A17) einer Anzahl $n_{SOP}$, die kleiner oder gleich der maximalen Anzahl MAX($n_{SOP}$) ist, aufweist.

5. Berechnungsverfahren nach Anspruch 4, bei dem das optische Signal wenigstens einen Datenrahmen transportiert und bei dem ein Fehlerkorrekturcode verwendet wird, um die von dem optischen Signal transportierten Daten zu kodieren, wobei das Verfahren **dadurch gekennzeichnet ist, dass** der Schritt des Bestimmens der Anzahl $n_{SOP}$ zu berechnender Polarisationszustände ferner die Berechnung (A15) einer Mindestanzahl MIN($n_{SOP}$) zu berechnender Polarisationszustände in Abhängigkeit von der Bitanzahl $n_{bits}$ des Rahmens und der Korrekturkapazität $Cap_{cod}$ des Fehlerkorrekturcodes aufweist, wobei die Anzahl $n_{SOP}$ ferner ausgebildet ist, um größer oder gleich wie die Mindestanzahl MIN($n_{SOP}$) zu sein.

6. Berechnungsverfahren nach Anspruch 5, **dadurch gekennzeichnet, dass** der verwendete Fehlerkorrekturcode wenigstens ausgehend von der Konkatenation eines ersten internen Codes, der geeignet ist, um die Mindestentfernung (D) zu verringern, und ausgehend von einem zweiten Fehlerkorrekturcode, der für die Korrektur von Fehlerblöcken geeignet ist, aufgebaut ist.

7. Verfahren zur Kompensation der modalen Polarisationsdispersion, die ein optisches Signal bei seiner Übertragung in einer optischen Verbindung beeinträchtigt, **gekennzeichnet durch** die aufeinanderfolgende Anwendung (B) einer Reihe vorbestimmter Steuerparameter auf eine Polarisationssteuerung, die sich stromaufwärts der optischen Verbindung befindet, wobei die vorbestimmten Steuerparameter mittels des Berechnungsverfahrens nach einem der Ansprüche 1 bis 6 berechnet werden (A).

8. Verfahren zur Kompensation nach Anspruch 7, bei dem das optische Signal wenigstens einen Datenrahmen transportiert, **dadurch gekennzeichnet, dass** die vorbestimmten Steuerparameter während einer Anwendungsdauer ($\tau_{app}$) angewandt werden, die in Abhängigkeit von der Bitanzahl $n_{bits}$ des Rahmens und der Anzahl $n_{SOP}$ der Polarisationszustände bestimmt wird.

9. Computerprogramm, das Codeanweisungen zur Umsetzung der Schritte des Berechnungsverfahrens nach einem der Ansprüche 1 bis 6 aufweist, wenn es in ein Berechnungsmodul geladen und auf diesem ausgeführt wird.

10. Computerprogramm, das Codeanweisungen aufweist, um die Schritte des Kompensationsverfahrens nach einem der Ansprüche 7 oder 8 umzusetzen, wenn es in eine Kompensationsvorrichtung zur modalen Polarisationsdispersion geladen und in ihr ausgeführt wird.

11. Kompensationsvorrichtung (PS) zur modalen Polarisationsdispersion, die eine Polarisationssteuerung (PC) aufweist, die geeignet ist, um ein optisches Signal zu empfangen, und ein Steuermodul (DRV), das eingerichtet ist, um wenigstens einen Steuerparameter auf die Polarisationssteuerung anzuwenden, wobei die Kompensationsvorrichtung Mittel aufweist, um das Kompensationsverfahren nach einem der Ansprüche 7 und 8 umzusetzen.

12. Kompensationsvorrichtung nach Anspruch 11, **dadurch gekennzeichnet, dass** das Steuermodul (DRV) ferner Speichermittel (MEM) aufweist, in welchen eine Mehrzahl von Steuerparametern aufgezeichnet ist, die auf die Polarisationssteuerung anzuwenden sind, wobei die Mehrzahl von Steuerparametern mittels des Berechnungsverfahrens nach einem der Ansprüche 1 bis 6 erzielt wird.

13. Optisches Übertragungssystem, das wenigstens eine optische Verbindung ($L_{opt}$) aufweist, die von einem optischen Signal ($S_{WDM}$) durchquert wird, und eine Kompensationsvorrichtung (PS) gemäß einem der Ansprüche 11 oder 12, wobei die Kompensationsvorrichtung mit dem Eingang der optischen Verbindung verbunden und eingerichtet ist, um den Polarisationszustand des optischen Signals vor seinem Eintreten in die optische Verbindung zu ändern, um die modale Polarisationsdispersion, die das optische Signal bei seinem Durchqueren der optischen Verbindung beeinträchtigt, zu kompensieren.

14. Optisches Übertragungssystem nach Anspruch 13, **dadurch gekennzeichnet, dass** es ferner wenigstens eine zusätzliche optische Faser (Fa1, Fa2) aufweist, deren Länge derart festgelegt ist, dass das Niveau der chromatischen Restdispersion am Ausgang der optischen Verbindung einen vorbestimmten Dispersionsschwellenwert überschreitet.

**15.** Optisches Übertragungssystem nach Anspruch 13 oder 14, **dadurch gekennzeichnet, dass** es ferner eine Mehrzahl optischer Sender ($Tx_1$, $Tx_n$) aufweist, die mit einem optischen Multiplexer (Mux) verbunden sind, um ein optisches Multikanalsignal zu der Kompensationsvorrichtung zu liefern, wobei die Mehrzahl optischer Sender und der optische Multiplexer mit Bauteilen mit Erhaltung der Polarisation hergestellt sind.

**Claims**

**1.** Method for computing a series of control parameters to be applied to a polarization controller (PC), arranged to compensate the modal dispersion of polarization affecting an optical signal ($S_{WDM}$) crossing an optical link ($L_{opt}$) as a function of control parameters, the method comprising:

- the computing (A3) of a plurality of polarization states ($SOP_i$) whose respective representations on a Poincaré sphere are mutually separated by a distance (d) above a minimum distance (D) depending on an acceptable binary error rate threshold; and
- for each computed polarization state, the associating (A5) of at least one control parameter ($Va_i,Vb_i$) to be applied to the polarization controller with the computed polarization state ($SOP_i$).

**2.** Computing method according to Claim 1, **characterized in that** it furthermore comprises the determining (A1) of a number $n_{SOP}$ of separate polarization states to be computed and **in that** the computing of the plurality of polarization states comprises the computing of $n_{SOP}$ polarization states ($SOP_i$) having substantially equidistant representations on the Poincaré sphere.

**3.** Computing method according to Claim 2, **characterized in that** the $n_{SOP}$ separate polarization states are computed so that their respective representations are distributed over the whole Poincaré sphere.

**4.** Computing method according to Claim 2 or 3, **characterized in that** the determining of the number $n_{SOP}$ of polarization states to be computed comprises the computing (A13) of a maximum number $MAX(_{SOP})$ of polarization states as a function of the minimum distance and the selecting (A17) of a number $n_{SOP}$ below or equal to said maximum number $MAX(n_{SOP})$.

**5.** Computing method according to Claim 4, in which the optical signal transports at least one data frame and in which an error-correcting code is used to encode the data transported by the optical signal, the method being **characterized in that** the step of determining the number $n_{SOP}$ of polarization states to be computed furthermore comprises the computing (A15) of a minimum number $MIN(n_{SOP})$ of polarization states to be computed as a function of the number $n_{bits}$ of bits of the frame and the correction capacity $Cap_{cod}$ of the error-correcting code, the number $n_{SOP}$ being furthermore selected to be above or equal to said minimum number $MIN (n_{SOP})$.

**6.** Computing method according to Claim 5, **characterized in that** the error-correcting code is constructed at least from the concatenation of a first internal code, able to reduce the minimum distance (D), and of a second error-correcting code suitable for correcting error blocks.

**7.** Method for compensating the modal dispersion of polarization affecting an optical signal upon its transmission over an optical link, **characterized by** the successive application (B) of a series of predetermined control parameters to a polarization controller situated upstream of the optical link, said predetermined control parameters being computed (A) by means of the computing method according to one of Claims 1 to 6.

**8.** Compensating method according to Claim 7, in which the optical signal transports at least one data frame, **characterized in that** the predetermined control parameters are applied during an application time ($\tau_{app}$) determined as a function of the number $n_{bits}$ of bits of the frame and of the number $n_{SOP}$ of polarization states.

**9.** Computer program comprising code instructions for implementing the steps of the computing method according to one of Claims 1 to 6, when it is loaded and executed on a computing module.

**10.** Computer program comprising code instructions for implementing the steps of the compensating method according to one of Claims 7 or 8, when it is loaded and executed on a device for compensating for the modal dispersion of polarization.

11. Device (PS) for compensating for the modal dispersion of polarization comprising a polarization controller (PC) able to receive an optical signal and a control module (DRV) arranged to apply at least one control parameter to the polarization controller, said compensating device comprising means for implementing the compensating method according to one or Claims 7 or 8.

12. Compensating device according to Claim 11, **characterized in that** the control module (DRV) furthermore comprises memorizing means (MEM) in which a plurality of control parameters to be applied to the polarization controller are stored, said plurality of control parameters being obtained by means of the computing method according to one of Claims 1 to 6.

13. Optical transmission system comprising at least one optical link ($L_{opt}$) crossed by an optical signal ($S_{WDM}$) and a compensating device (PS) according to one of Claims 11 or 12, said compensating device being connected at the input of said optical link and arranged to modify the polarization state of the optical signal before its input into said optical link in order to compensate for the modal dispersion of polarization affecting the optical signal upon crossing said optical link.

14. Optical transmission system according to Claim 13, **characterized in that** it furthermore comprises at least one additional optical fibre (Fa1, Fa2), the length of which is determined so that the level of residual chromatic dispersion at the output of the optical link exceeds a predetermined dispersion threshold.

15. Optical transmission system according to Claim 13 or 14, **characterized in that** it furthermore comprises a plurality of optical emitters ($Tx_1$, $Tx_n$) connected to an optical multiplexer (Mux) to supply a multi-channel optical signal to the compensating device, the plurality of optical emitters and the optical multiplexer being produced with polarization-maintaining components.

FIG. 1A

-Log(BER)

FIG. 1B

-Log(BER)

FIG. 1C

-Log(BER)

FIG. 1D

-Log(BER)

FIG. 1E

-Log(BER)

12
11
10
9
8
7
6
5
4
3
2

FIG. 1F

-Log(BER)

12
11
10
9
8
7
6
5
4
3
2

FIG. 2

FIG. 3

$$\boxed{\text{DET} \quad n_{SOP}} \quad \text{A1} \qquad \text{A}$$

$$\boxed{\text{CALC} \quad \{SOP_i\}_{1 \le i \le n_{SOP}}} \quad \text{A3}$$

$$\boxed{SOP_i \longrightarrow Va_i, Vb_i, \ldots} \quad \text{A5} \qquad \text{A53}$$

$$\boxed{i \longrightarrow i+1}$$

A51

$$\left\langle i = n_{SOP} ? \right\rangle \quad -$$

$+$

$$\left\{ (Va_i, Vb_i, \ldots) \right\}_{1 \le i \le n_{SOP}}$$

DET D — A11 — A1

DET MAX($n_{SOP}$) — A13

DET MIN($n_{SOP}$) — A15

SELEC MIN($n_{SOP}$) ≤ $n_{SOP}$ ≤ MAX($n_{SOP}$) — A17

$n_{SOP}$

**FIG. 4**

$V_B$ $V_A$ $V_C$ — PC

x y z

**FIG. 5**

FIG. 6

FIG. 7

FIG. 8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **DE DANIEL L. PETERSON JR. et al.** Polarization mode dispersion compensator field trial and field fiber characterization. *OPTICS EXPRESS,* 15 Juillet 2002, vol. 10 (14), 614